# DEMANDE DE BREVET EUROPEEN

(11) **EP 0 648 587 A2**
(43) Date de publication de la demande: **19.04.1995**
(21) Numéro de dépôt: 94430013.6
(22) Date de dépôt: 14.10.1994
(51) Int. Cl.: B29C 43/34, B29C 31/04

(54) **Procédé de fabrication d'objets en matière plastique de récupération, et installation pour la mise en oeuvre du procédé**

(30) Priorité: 15.10.1993 FR 9312592
(71) Demandeur: B 2 TEST, F-13781 Aubagne (FR)
(72) Inventeur: Testa, Jean Pierre, F-13360 Roquevaire (FR)
(74) Mandataire: Somnier, Jean-Louis

(57) **Abrégé**

Le procédé de fabrication d'objets en matière plastique comprend une étape d'extrusion continue d'un matière plastique à au moins un poste d'extrusion déplaçable ou fixe.

Ledit procédé comprend en outre :
- une étape intermédiaire de répartition constituée d'une part, par un préformage de manière à obtenir une préforme (10) autour d'un noyau (7) allongé et en déplacement par rapport audit poste d'extrusion (12) et d'autre part, par une mise en place de ladite préforme (10) au droit d'au moins un poste de pressage (11), ladite préforme (10) étant supportée par ledit noyau (7), et
- une étape de pressage séquentiel de ladite préforme (10) audit poste de pressage (11), lequel poste de pressage (11) est déplaçable ou fixe, et destiné à la mise en forme.

Application à la fabrication de pièces ou de profilés en matière plastique de récupération.

## Description

L'invention concerne un procédé de fabrication d'objets en matière plastique, notamment destiné à la récupération de matière plastique.

Le domaine technique de l'invention est celui de la fabrication d'objets de longueur définie ou pièces, et de la fabrication d'objets de longueur indéfinie ou profilés.

L'invention peut s'appliquer par exemple à la fabrication de palettes de manutention, ou à la fabrication de tubes.

Les objets à fabriquer sont mis en forme par un processus discontinu dans le cas de pièces, ou par un processus continu dans le cas de profilés.

On connaît déjà, par exemple par la demande de brevet FR-A-2.613.659 déposée le 13 Avril 1987, un procédé de fabrication de pièces rigides et creuses, selon lequel on réalise dans une boîte à noyaux, un noyau constitué de sable mélangé avec des liants. On injecte la matière servant à constituer la pièce dans le moule, on effectue le démoulage de la pièce, on réalise le dénoyautage de la pièce, puis on récupère et on régénère le sable du noyau.

L'injection qui utilise des matières spécifiques, répond parfaitement à des critères de productivité, qualité et fiabilité. Toutefois, un tel procédé n'est envisageable que pour des matériaux de qualité, et devient inopérant pour la transformation des matériaux issus de déchets courants, qui fournissent une matière inadaptée, hétérogène, polluée ou dégradée, et ne permettent qu'une fluidité trop faible et irrégulière.

On connaît aussi par la demande européenne EP-A-208.240 déposée le 02 Juillet 1986, un procédé permettant de rendre un profilé de fermeture en matière plastique solidaire d'une nappe de films en matière plastique, en extrudant un profilé de fermeture, la jonction étant effectuée par la chaleur du profilé fraîchement extrudé. Toutefois, l'extrusion requiert un équilibre des flux pour assurer la qualité de la production. Des matières issus de déchets courants ne permettent pas d'obtenir une régularité et une homogénéité satisfaisante, et le recyclage de matériaux de récupération entraîne alors la détérioration de la qualité et de la productivité.

La présente invention a pour objet un procédé de fabrication d'objets en matière plastique, notamment en matière plastique de récupération, lesdits objets étant de longueur définie ou indéfinie, ledit procédé comprenant une étape d'extrusion continue d'une matière plastique à au moins un poste d'extrusion déplaçable ou fixe.

La présente invention a pour objectif de proposer un procédé de fabrication du type précité, ne présentant pas les inconvénients indiqués ci-dessus, c'est-à-dire étant adapté à tout type de matière plastique ou thermoplastique, en particulier issue de déchets même mélangés ou fortement chargés, et qui répond à des impératifs de qualité, de productivité et d'automatisation, même lorsque le matériau n'est pas moulable ou extrudable par des procédés usuels.

Conformément à l'invention, cet objectif est atteint du fait que le procédé de fabrication d'objets en matière plastique du type précité comprend en outre :
- une étape intermédiaire de répartition constituée d'une part, par un préformage de manière à obtenir une préforme autour d'un noyau allongé et en déplacement par rapport audit poste d'extrusion et d'autre part, par une mise en place de ladite préforme au droit d'au moins un poste de pressage, ladite préforme étant supportée par ledit noyau, et
- une étape de pressage séquentiel de ladite préforme audit poste de pressage, lequel poste de pressage est déplaçable ou fixe, et destiné à la mise en forme.

On entend par préforme (ou paraison) une masse compacte (qui est molle à la sortie de la tête d'extrusion) de matière plastique extrudée.

Le procédé de fabrication d'objets en matière plastique conçu conformément à l'invention présente un certain nombre d'avantages. Etant donné que le procédé de fabrication comporte une étape intermédiaire de répartition, il est possible de synchroniser le processus continu d'extrusion avec le processus séquentiel de pressage et/ou moulage. L'extrudat malléable qui sort en continu du poste d'extrusion est conditionné en une préforme avant sa mise en forme finale, en assurant ainsi un stockage tampon de la matière, un dosage, une approche dimensionnelle, un profil thermique, une conservation des caractéristiques et de l'homogénéité des mélanges. En outre, un transfert et un positionnement précis de l'extrudat sont permis et une transformation directe du déchet de départ pour aboutir au produit final sans interruption de ligne de fabrication est obtenue.

Grâce à l'étape préalable d'extrusion, une masse fondue régulière et homogène est obtenue. Grâce à l'étape finale de pressage et/ou moulage, la transformation de l'ébauche ou préforme en pièce finale est donc parfaitement maîtrisée par un processus régulier. Enfin, le noyau qui progresse en même temps que le flux de matière qui l'enrobe sert non seulement de guide et de support jusqu'au positionnement dans le poste de pressage, mais encore sert de noyau central si nécessaire, ou se retire pour libérer la matière qui est moulée et/ou pressée.

Enfin le procédé selon l'invention est économique car les conditions de mise en oeuvre, de température et de pression, sont modérées, et la taille et la complexité du matériel sont réduites.

Les avantages de l'extrusion tels que l'efficacité, la fiabilité, et la productivité du matériel, sont cumulés aux avantages du pressage, c'est-à-dire des contraintes modérées avec un moulage faible pression et des taux de cisaillement réduits, un fonctionnement simple, fiable et peu coûteux, une maîtrise des retraits et des tensions internes et la possibilité d'un refroidissement efficace.

Les avantageuses dispositions suivantes sont en outre de préférences adoptées :
ledit procédé de fabrication comprend en outre une étape de retrait du noyau, ladite étape de retrait étant postérieure à ladite mise en place au droit du poste de pressage ;
l'étape de pressage est effectuée lors du déplacement dudit noyau et simultanément à une étape de préformage d'un cycle ultérieur ;
ledit procédé de fabrication d'objets en matière plastique comporte une seconde étape de préformage interposée entre lesdites étapes de répartition et de pressage séquentiel ;
ladite étape de pressage est effectuée pendant un déplacement dudit poste de pressage, ledit déplacement du poste de pressage étant suivi par un retour rapide du poste de pressage en position initiale ;
ledit procédé de fabrication d'objets en matière plastique comporte en outre une étape d'accumulation de matière plastique sensiblement simultanée à ladite étape de pressage séquentiel.

La présente invention vise non seulement le nouveau procédé de fabrication d'objets en matière plastique, mais également une installation de fabrication d'objets en matière plastique, apte à être utilisée pour la mise en oeuvre du procédé de l'invention. L'installation selon l'invention pour fabrication d'objets en matière plastique, notamment en matière plastique de récupération, lesdits objets étant de longueur définie ou indéfinie, du type comprenant au moins un poste d'extrusion déplaçable ou fixe, lequel poste d'extrusion comprend au moins une tête d'extrusion présentant au moins une ouverture d'entrée de matière et au moins une ouverture de sortie de matière, est caractérisée en ce que ladite installation comprend en outre :
- au moins un noyau allongé déplaçable dans ladite ouverture de sortie de matière, de manière à constituer une préforme de la matière plastique extrudée autour dudit noyau se déplaçant dans l'ouverture de sortie, et
- au moins un premier poste de pressage séquentiel déplaçable ou fixe, et apte à presser ladite préforme constituée autour dudit noyau.

Les avantageuses dispositions suivantes de ladite installation de fabrication sont en outre de préférence adoptées :
ladite tête d'extrusion comporte une ouverture d'entrée ou de sortie du noyau alignée avec ladite ouverture de sortie de matière pour permettre le déplacement du noyau à l'intérieur desdites ouvertures (6, 4), et un moyen d'actionnement du noyau, ledit noyau étant supporté par la tête d'extrusion ;
lesdits postes d'extrusion et de pressage sont déplaçables l'un par rapport à l'autre selon un mouvement de va-et-vient ;
ladite installation de fabrication d'objets en matière plastique comporte un accumulateur disposé avant ladite tête d'extrusion par rapport au sens de circulation de la matière plastique ;
ladite installation de fabrication d'objets en matière plastique comporte un second poste de pressage séquentiel et associé au premier poste de pressage ;
ledit noyau et/ou ledit poste de pressage comportent au moins un moyen d'injection de fluide au coeur de ladite préforme ;
ledit noyau a une forme sensiblement tronconique s'évasant dans la direction de circulation de la matière plastique ;
ledit noyau et/ou ledit poste de pressage comportent des reliefs aptes à imprimer des rainures sur lesdits objets, lesdits reliefs étant éventuellement disposés sur une même surface sensiblement conique.

Les modes de réalisation préférentiels de l'invention présentent un certain nombre d'avantages : une automatisation fiable du procédé est permise ; il est possible d'utiliser le noyau ou poinçon pour le moulage de corps creux, de profilés tubulaires, ou encore pour le soufflage de pièces à très forte épaisseur ; il est possible d'effectuer un remplissage à l'aide du noyau de manière à réaliser des pièces lestées ; une association de plusieurs matériaux, de plusieurs couches ou de plusieurs composants est permise ; il est possible d'effectuer un renforcement, un pelliculage, un allégement ou un lestage ; enfin il est possible d'utiliser des matières qui ne peuvent être moulées par d'autres procédés.

L'invention permet la mise en oeuvre de mélanges assez hétérogènes (du fait de matières de recyclage) et de surmonter les difficultés qui viennent des irrégularités, des incohérences de la masse en fusion soumise aux diverses sollicitations propres à chaque étape ultérieure du procédé de transformation.

L'invention procure une configuration originale dans laquelle la partie centrale de l'outillage en sortie d'extrudeuse, est mobile et coulisse dans le sens d'écoulement de la matière et accompagne la matière. Cette pièce (le poinçon ou noyau) sert de support interne à la matière et contribue au guidage et au transfert de l'extrudât (la préforme) dans le moule (la presse). Le dispositif particulier de poinçon mobile et asservi permet d'optimiser le procédé d'extrusion - pressage mis en jeu.

L'invention sera mieux comprise et d'autres caractéristiques et leurs avantages apparaîtront à la lecture de la description des modes de réalisation donnés ci-après à titre d'exemple.

Il sera fait référence aux dessins annexés dans lesquels :
les figures 1 et 2 sont des coupes longitudinales illustrant deux étapes de la fabrication d'objets de longueur définie, la tête d'extrusion étant de type en "Z" ;
les figures 3 et 4 sont des coupes longitudinales partielles illustrant des installations comportant respectivement une tête d'extrusion en équerre et un accumulateur ;
la figure 5 est une coupe longitudinale illustrant une installation comportant un moyen d'introduction de fluide par l'intermédiaire du noyau ;
les figues 6 et 7 sont des coupes longitudinales partielles illustrant deux étapes initiales de la fabrication d'objets de longueur indéfinie à l'aide de deux postes de pressage séquentiel ;
la figure 8 est une coupe longitudinale illustrant une installation comportant un poste d'extrusion mobile ;
la figure 9 est une coupe longitudinale partielle illustrant un procédé de co-extrusion ;
la figure 10 est une coupe longitudinale partielle illustrant une installation comportant un poste d'extrusion muni de reliefs ;
la figure 11 est une coupe longitudinale illustrant un procédé de recouvrement d'un matériau solide, et un procédé de renforcement de la matière plastique ;
la figure 12 est une coupe longitudinale partielle illustrant un procédé comprenant un moyen de pressage secondaire.

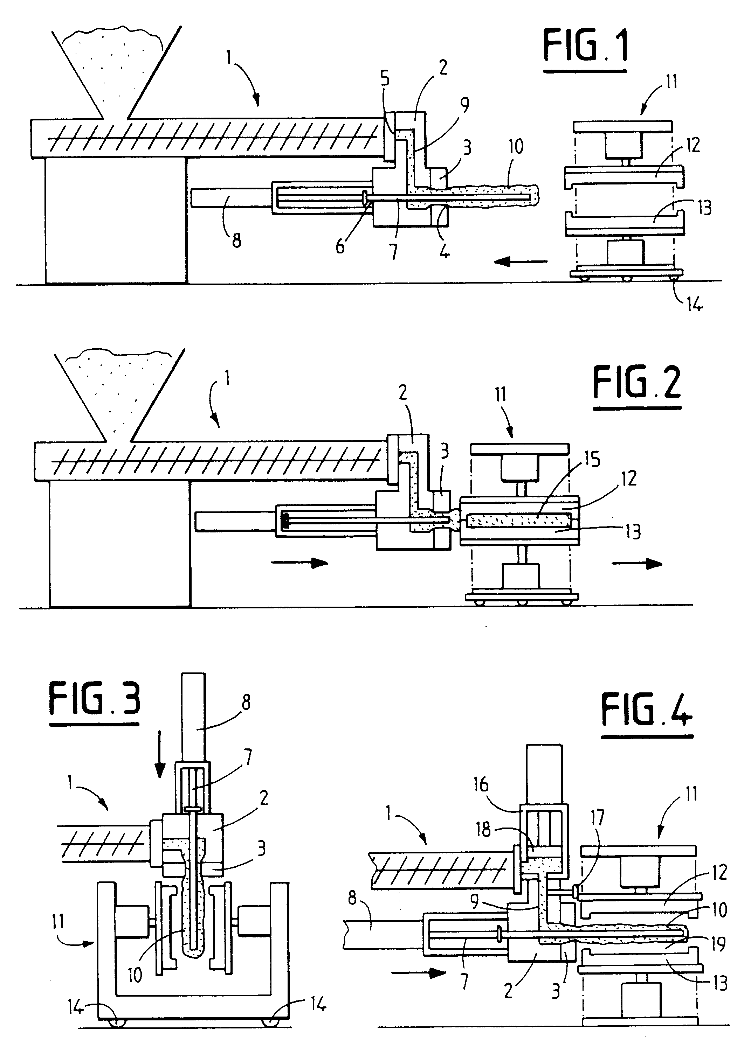

On se réfère aux figures 1 à 4 des dessins les différents modes de réalisation des installations qui y sont représentés comportent un poste d'extrusion 1 alimenté en matière plastique ou matière première de base formulée, comportant notamment une matière plastique (thermoplastique) de récupération (recyclée), qui restitue un flux de matière plastique fondue (molle). Le poste d'extrusion 1 comporte une tête d'extrusion 2 de type en "Z" (voir figure 1), ou en équerre (voir figure 3), ou de type à accumulateur 16 (voir figure 4). La tête d'extrusion 2 comporte une filière 3 munie d'une ouverture de sortie de matière 4, et d'une ouverture d'entrée de matière 5.

La tête d'extrusion 2 supporte un noyau 7 qui est mobile dans l'ouverture de sortie de matière 4, une ouverture d'entrée ou de sortie du noyau 6 étant alignée avec l'ouverture de sortie 4 pour permettre le déplacement du noyau 7 actionné par un moyen d'actionnement 8, tel qu'un vérin, supporté par la tête d'extrusion 2. Préférentiellement, le noyau 7 subit un mouvement de translation combiné éventuellement à un mouvement de rotation sur lui-même.

Ainsi, la tête d'extrusion assure le cheminement de la matière fondue 9 depuis le poste d'extrusion 1 jusqu'aux outillages de sortie constitués par la filière 4 et le noyau 7, de manière à ce que l'extrudat émerge en une préforme 10 qui enrobe le noyau 7 se déplaçant dans l'ouverture de sortie de matière 4.

Selon un mode de réalisation préférentiel, le noyau 7 a une forme cylindrique, de manière à constituer un poinçon. Selon d'autres modes de réalisation, le noyau 7 peut avoir d'autres formes, par exemple la forme d'une plaque. Un mode de réalisation prévoit de munir le noyau 7 d'aspérités (non représentées), par exemple des nervures et/ou des rainures disposées périphériquement à la manière d' anneaux ou en hélice. Un autre mode de réalisation prévoit un noyau 7 lisse.

L'installation représentée comporte, en outre, un poste de pressage 11 sur lequel sont montés deux éléments de moules 12, 13. Le poste de pressage 11 écrase la matière malléable qui flue sous la pression dans la cavité 15 délimitée par les éléments de moules 12, 13 (voir figure 2) de manière à réaliser une mise en forme avant un refroidissement, une solidification.

Tel que représenté aux figures 1 et 2, le poste de pressage 11 peut être mobile, par exemple sur des moyens de roulement 14, pour accompagner un apport de matière continu. Tel que représenté à la figure 4, le poste de pressage 11 peut être fixe si un accumulateur 16 assure un stockage intermédiaire, de manière à restituer la matière plastique de façon séquentielle.

Préférentiellement, le fonctionnement de l'installation est automatisé de manière à commander l'écoulement de la matière, la sortie régulée du poinçon 7, l'ouverture et la fermeture de vannes, le retrait du noyau 7, le dégagement des éléments de moule 12, 13, et le dégagement du poste de pressage 11.

On se réfère plus précisément aux figures 1 et 2 ; tel que représenté, l'extrudat 9 qui émerge est mis en forme par la filière 3 tandis que le noyau central 7 progresse avec la matière en fusion qui l'entoure et constitue ainsi une préforme 10. Lorsque la course programmée du noyau 7 est accomplie, la préforme 10 est disponible et les éléments de moule 12, 13 montés sur le poste de pressage 11 mobile viennent par un déplacement rapide, se positionner puis se refermer sur la préforme 10. La matière molle est écrasée et flue sous la pression dans les empreintes des éléments de moules 12, 13, tandis que le noyau 7 se retire avant la fermeture totale du moule. Le poste de pressage 11 après son déplacement rapide vers la tête d'extrusion 2, reprend son mouvement lent de progression dans le sens de l'extrusion pour dégager continûment un espace nécessaire à la formation d'une préforme d'un cycle ultérieur, laquelle préforme est constituée pendant que l'objet se refroidit, et se solidifie dans les éléments de moule 12, 13 assemblés. Puis le moule s'ouvre, et libère la pièce finie qui est éjectée avant que le poste de pressage 11 ne reparte vers la tête d'extrusion 2, de manière à saisir une préforme 10 d'un cycle ultérieur.

On se réfère maintenant à la figure 4 des dessins ; l'installation qui y est représentée permet par exemple la réalisation de pièces creuses, le noyau 7 utilisé de manière à utiliser la préforme 10 restant dans le moule 12, 13 et servant ainsi de noyau central pour la mise en forme définitive. Un poste d'extrusion 1 représenté partiellement est alimenté avec de la matière première de base formulée, et génère un flux continu de matière plastique fondue qui possède les caractéristiques nécessaires à l'élaboration du produit fini. La matière plastique est réceptionnée dans un accumulateur 16 qui se remplit lorsque la vanne 17 de sortie est fermée. Lorsqu'un signal est donné, la vanne 17 s'ouvre et le piston 18 propulse la matière accumulée, simultanément à l'avancement du noyau 7 poussé par le moyen d'actionnement 8. Le noyau 7 réceptionne l'extrudat de manière à constituer une préforme et se positionne dans le moule 12, 13 ouvert, le noyau 10 étant enrobé de matière plastique, puis la vanne 17 se referme, le piston 18 de l'accumulateur 16 devient libre et remonte sous la poussée de la matière plastique qui charge l'accumulateur 16, et le moule 12, 13 se ferme, actionné par le poste de pressage 11 et écrase la matière qui flue dans la cavité du moule 12, 13 entre des empreintes 19 des éléments de moules 12, 13 et le poinçon 7. Après refroidissement, le noyau 7 se retire et le moule 12, 13 s'ouvre de manière à libérer la pièce et à assurer un nouveau cycle.

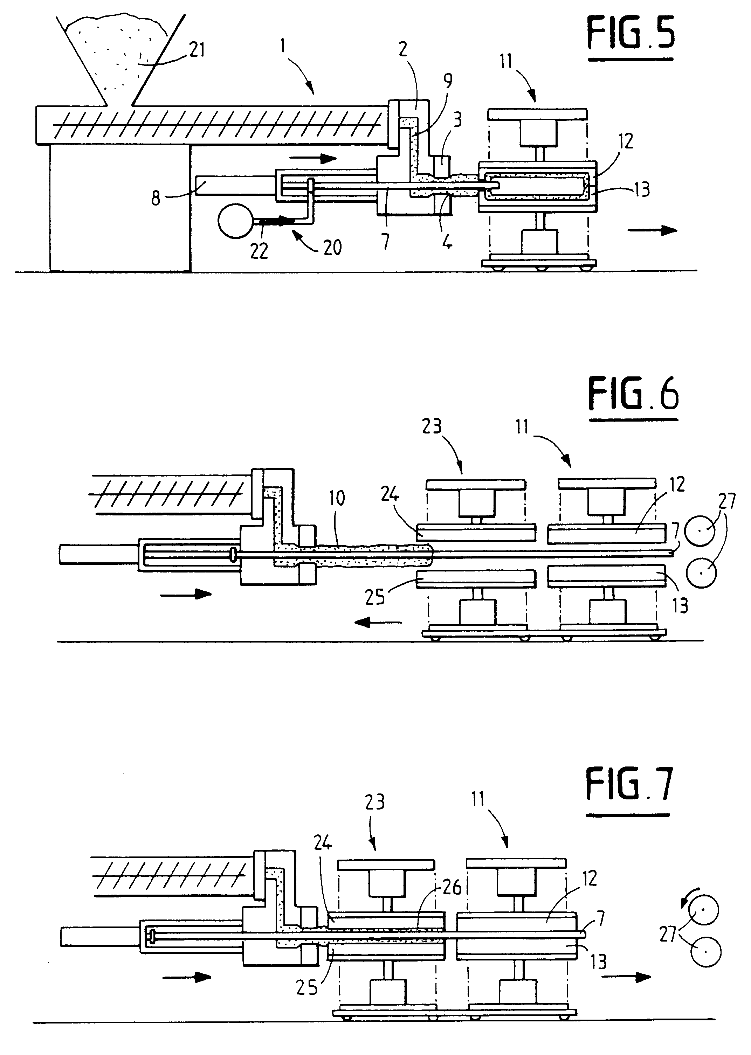

On se réfère à la figure 5 des dessins l'installation qui y est représentée permet de réaliser des corps creux par soufflage en résolvant les problèmes d'allongement de la préforme et de spécificité de la matière. La fabrication de pièces très épaisses avec tout type de matière est possible.

Un poste d'extrusion 1 alimenté avec la matière première de base formulée 21 génère un flux continu de matière plastique fondue 9.

Par rapport aux modes de réalisation des figures 1 et 2, il faut noter que l'étape selon laquelle le moule 12, 13 emprisonne la matière molle, est suivie par un retrait partiel du noyau 7, et par une injection au coeur de la matière plastique d'un flux d'air ou de gaz sous pression 22 à l'aide d'un moyen d'injection de fluide 20, de manière à repousser la matière et à la projeter contre les parois des éléments de moule froides 12, 13 où la matière se fige en réservant une cavité au sein de l'objet.

Le poste de pressage 11, après son déplacement rapide vers la tête d'extrusion 2, reprend son mouvement lent de progression dans le sens de l'extrusion et de manière synchronisée avec le noyau 7 pour dégager la voie à une nouvelle préforme. Simultanément, la pièce refroidit dans le moule 12, 13 fermé, la surpression du fluide interne est évacuée et le moule 12, 13 s'ouvre, et libère la pièce finie qui est éjectée avant que le poste de pressage 11 ne reparte rapidement saisir une nouvelle préforme et commence un nouveau cycle.

Selon un mode de réalisation non représenté, l'installation décrite ci-dessus comporte un accumulateur 16 (voir figure 4), de manière à utiliser un poste de pressage 11 fixe.

Un autre mode de réalisation non représenté prévoit une installation comportant un poste de pressage 11, muni d'un moyen d'injection de fluide. Le moyen d'injection de fluide, par exemple une canne, disposée dans le moule 12, 13, se déplace et pénètre au coeur de la matière molle de manière à injecter un fluide sous pression qui repousse et propulse la matière contre les parois du moule 12, 13 où elle se fige, en laissant des évidements dans des parties massives, le moule 12, 13 s'étant refermé sur la préforme de manière à répartir la matière plastique principalement dans des parties massives, le moule 12, 13 n'ayant pas été rempli complètement. Puis la surpression est évacuée et le moule s'ouvre pour éjecter la pièce finie. Un tel moulage avec injection de fluide à coeur permet d'obtenir un objet creux, allégé, ou lesté.

On se réfère ensuite aux figures 6 et 7 des dessins ; par rapport aux figures 1 et 2 précédemment décrites, il faut noter que l'installation comporte un deuxième poste de pressage 23 supportant un deuxième moule 24, 25 constitué d'une deuxième préforme 26 lors d'une seconde étape de préformage préalable à la mise en forme finale. Le moule de préformage 24, 25 et le moule de pressage 12, 13 sont montés sur les deux presses conjuguées 23, 11 qui se déplacent selon l'axe d'extrusion. Lorsque la course programmée du noyau 7 est accomplie, le moule de préforme 24, 25 et le moule de pressage 12, 13 s'ouvrent en libérant la seconde préforme 26 et le profilé figé non représenté supporté par le noyau 7, puis les postes de pressage 23, 11 viennent rapidement se positionner près de la tête d'extrusion 2, puis se referment sur la première préforme 10 et la seconde préforme 26 maintenues par le noyau 7. Le noyau 7 se retire alors à sa position initiale rapidement, c'est-à-dire décalé d'un pas sensiblement égal à la longueur d'un poste de pressage, puis le noyau 7 reprend sa progression lente et simultanée à la sortie de l'extrudat, et à l'avance des deux postes de pressage 23, 11. Pendant cette phase de moulage, l'objet, préférentiellement un objet de longueur indéfinie tel qu'un profilé, est mis en forme par pressage ; la deuxième préforme 26 est obtenue par le moule de préformage 24, 25, et l'extrudat est réceptionné sur le noyau 7 de manière à constituer une première préforme 10, l'ensemble subissant un mouvement de translation lente dans l'axe d'extrusion. Lorsque la position extrême est atteinte, les moules s'ouvrent, puis sont opérés un transfert rapide, une fermeture des moules, un retrait du noyau 7 et une nouvelle phase de moulage Après démoulage, l'objet ou profilé est véhiculé par des rouleaux 27 et refroidi complètement par aspersion d'eau avant d'être conditionné.

Selon un mode de réalisation non représenté, un procédé analogue au procédé décrit ci-dessus, prévoit l'incorporation d'un accumulateur 16 (voir figure 4) de matière en fusion qui permet la restitution rapide et séquentielle de l'extrudat et évite le déplacement des presses 23, 11.

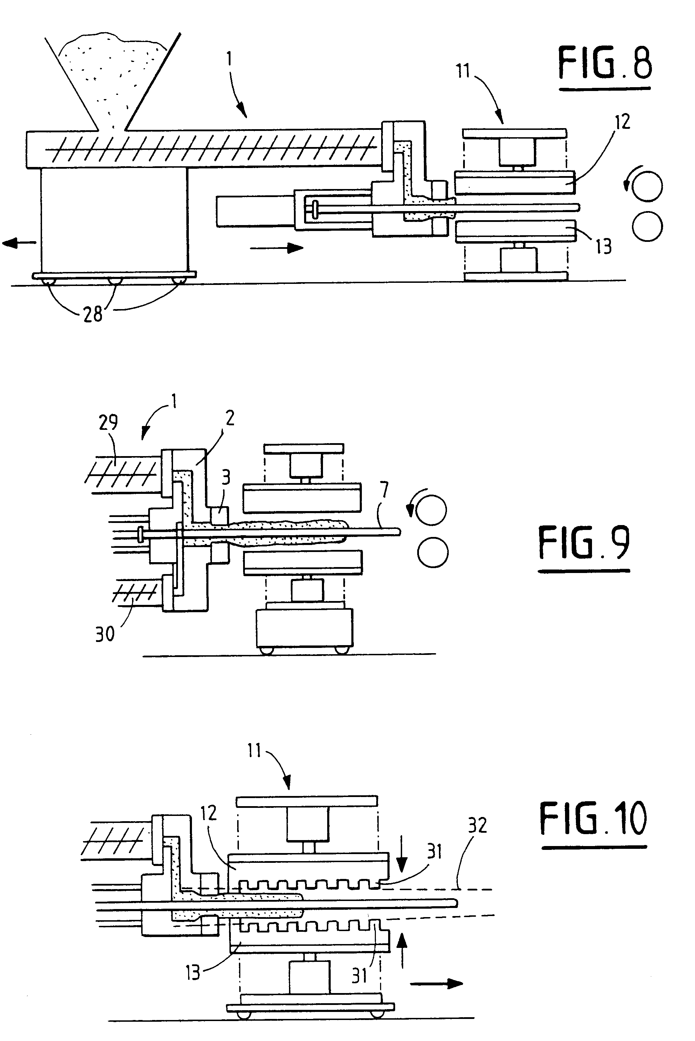

On se réfère maintenant à la figure 8 des dessins ; l'installation qui y est représentée permet la mise en oeuvre d'un procédé selon 1' invention qui prévoit le mouvement du poste d'extrusion 1 relativement au poste de pressage fixe 11. Lors de l'étape de moulage, le poste d'extrusion 11 qui comprend des moyens de roulement 28, s'éloigne lentement du poste de pressage 11 qui reste fixe afin de dégager l'extrudat qui émerge puis, après ouverture du moule, le poste d'extrusion 1 avance rapidement vers le moule 12, 13 de manière à approvisionner et à faire avancer le profilé.

Il est à noter que dans les procédés précédemment décrits, un dégagement complet du noyau 7 hors du moule 12, 13 lors du pressage de mise en forme final, permet de compacter à coeur la matière plastique.

Un mode de réalisation non représenté prévoit un noyau 7 de type tronconique qui s'évase dans la direction de circulation de la matière plastique, de manière à permettre des possibilités de configuration particulière et d'orientation moléculaire par étirement de la préforme, et à permettre des résistances accrues. La transformation de la préforme en forme finale est alors effectuée avec un étirement axial et/ou radial. Le noyau 7 tronconique, par un mouvement de translation de retour, entraîne une expansion de la préforme qui repousse la matière plastique dans l'empreinte du moule 12, 13 qui effectue le pressage.

On se réfère à la figure 9 des dessins ; l'installation qui y est représentée permet la mise en oeuvre d'un procédé selon l'invention précédemment décrit, utilisant une co-extrusion et un moulage multi-matières. On obtient ainsi une structure à plusieurs couches, un pelliculage, ou un renforcement par exemple. Le poste d'extrusion 1 comprend deux extrudeuses 29, 30 alimentées avec deux types de matières premières de base formulées, qui produisent dans une même tête d'extrusion 2 un flux continu des deux matières fondues qui sont disposées selon un schéma établi. Le choix des matières premières, leur formulation, la répartition dans la tête d'extrusion 2 et la forme de la filière 3 ou du noyau 7 permettent l'obtention d'une structure multi-matières cohérente et offrant des caractéristiques particulières.

Selon un mode de réalisation non représenté, l'utilisation d'une extrudeuse secondaire 30 avec une répartition adaptée dans la tête d'extrusion 2, permet l'obtention d'une fine pellicule externe. L'extrudat qui émerge possède en surface la couche d'aspect et est transféré successivement dans le moule de préforme, le moule de pressage, puis éjecté et refroidi complètement. Le profilé ainsi réalisé offre un aspect de surface qui est celui de la matière de recouvrement extrudé par l'extrudeuse secondaire, avec à coeur la masse principale extrudée par l'extrudeuse principale 29.

On se réfère à la figure 10 des dessins ; l'installation qui y est représentée comporte un poste de pressage 11 muni d'éléments de moules 12, 13 présentant en vis-à-vis des reliefs 31. Selon un mode de réalisation, les reliefs 31 définissent un volume conique 32 à l'intérieur du moule 12, 13. Les reliefs 31 présentent différentes formes qui sont gravées à la surface du moule et transmises au profilé après pressage, refroidissement et ouverture du moule. Il est donc possible d'obtenir n'importe quel type de profilé avec en surface des reliefs, toute forme moulable pouvant être reproduite sur la surface externe du profilé.

Selon un autre mode de réalisation, le noyau 7 est gravé avec des reliefs longitudinaux qui permettent la translation retour et impriment ainsi à l'intérieur du profilé un motif incrusté après refroidissement. Le noyau 7, préférentiellement un poinçon cylindrique, peut subir un mouvement de rotation combiné à un mouvement de translation, de manière à obtenir des rainures disposées en spirales à l'intérieur du profilé. Il est donc possible d'obtenir n'importe quel type de profilé creux, muni de rainures intérieures.

Un autre mode de réalisation de l'invention non représenté prévoit une installation permettant la mise en oeuvre d'un moulage multi-matériaux, tel qu'un surmoulage, un renforcement, ou un recouvrement par exemple. L'association de matière plastique avec tout type de matériau plastique ou non est permise.

Selon un procédé de l'invention, le poste d'extrusion 1 alimenté avec de la matière plastique formulée produit un extrudat qui, configuré et supporté par le noyau mobile 7, constitue une préforme 10 qui est positionnée dans le poste de pressage 11 où sont disposées des pièces solides non représentées.

A la fermeture du poste de pressage et du moule 12, 13, le fluage de la matière plastique de la préforme malléable va enrober lesdites pièces solides et se souder à elles, prendre la forme de l'intérieur du moule 12, 13, et solidariser l'ensemble après refroidissement.

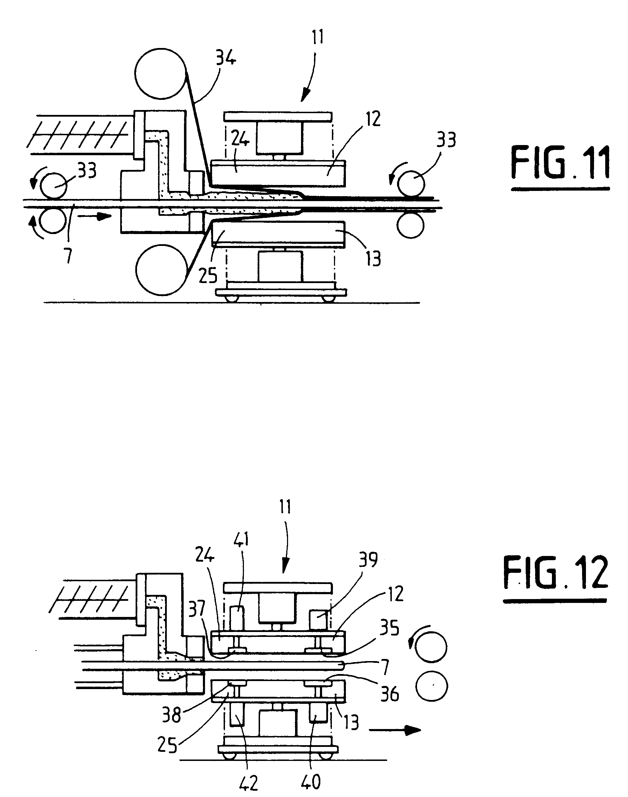

On se réfère à la figure 11 des dessins ; l'installation qui y est représentée comporte un noyau 7 ou poinçon mobile constitué par un matériau à surmouler ou renfort, ledit noyau avançant à l'aide de rouleaux 33 en même temps que l'extrudat et en supportant l'extrudat. Le passage dans le poste de pressage 11 constitué par un moule de préformage et un moule de pressage assure la mise en forme et l'adhérence finale. Une telle installation permet la combinaison d'un matériau solide avec des matières plastiques, de manière à obtenir des recouvrements protecteurs, des recouvrements assembleurs, des composites, ou encore des renforcements de pièces plastiques.

Un autre mode de réalisation prévoit le passage d'un renfort 34 simultanément à l'extrudat dans le moule de préformage 24, 25, le renfort 34 étant alors incorporé à la matière plastique, puis compacté et soudé dans le moule de pressage 12, 13. Une telle installation permet l'obtention de résistance accrue. Le renfort 34 peut être constitué de fils, de fibres ou de tissu par exemple.

Selon un autre mode de réalisation représenté à la figure 12, le procédé décrit à l'aide des figures 6 et 7 est mis en oeuvre à l'aide d'une installation ne comportant qu'un seul poste de pressage 11, qui comprend des moules de préformage 24, 25 et de pressage 12, 13 juxtaposés. Un moule monté sur une presse mobile, ou fixe si on opère avec un accumulateur, constitue donc à la fois le moule de deuxième préforme et le moule de pressage. Avec l'avance du noyau 7 enrobé d'extrudat, pressage et retour rapide du noyau, la matière plastique progresse et passe de l'état de première préforme à celui de seconde préforme, puis est mis en forme définitive pour devenir un profilé qui sera guidé et refroidi complètement avant d'être conditionné.

Un mode de réalisation préférentiel prévoit une installation qui comporte des éléments de moule 12, 13, 24, 25 munis de parties mobiles 35, 36, 37, 38 actionnées par des vérins 39, 40, 41, 42, de manière à affiner le dosage de la matière de la première ou de la seconde préforme, et à participer au pressage de mise en forme finale. L'extrudat est transféré dans un moule de préformage 24, 25 muni desdites parties mobiles 37, 38 actionnées par des vérins 41, 42 qui, après fermeture du moule 24, 25, viennent ajuster précisément le dosage. Puis la préforme est transférée dans le moule de pressage 12, 13 qui effectue la mise en forme définitive. Afin d'obtenir une bonne régularité dimensionnelle et une finition exempte de bavures, d'autres parties mobiles 35, 36 actionnées par d'autres vérins 39, 40 assurent un autre pressage secondaire après la fermeture du moule de pressage définitif 12, 13. Sous la pression, la matière flue et épouse parfaitement la cavité du moule 12, 13 tout en se compactant, et le surplus est refoulé vers l'amont où se constitue la première 10 ou la seconde 26 préforme (voir figures 6 et 7). De même, la seconde 26 ou la première 10 préforme opérant son dosage, repousse le surplus de matière plastique fondue vers l'amont, c'est-à-dire vers la première préforme 10 ou vers l'extrudat qui est en attente. Ce flux de fluide se superpose au flux de base en assurant une parfaite régularité.

Bien qu'on ait décrit le procédé de fabrication d'objets en matière plastique selon l'invention dans son application utilisant une installation comprenant une seule ligne de fabrication comportant par exemple un seul noyau, il faut noter que l'invention a des applications plus générales. Un procédé de fabrication et une installation selon l'invention peuvent utiliser plusieurs lignes de fabrication, le nombre de postes d'extrusion, de noyaux, ou de postes de pressage par exemple, pouvant être supérieur ou égal à deux.

Bien entendu, diverses modifications peuvent être apportées par l'homme du métier au procédé et à l'installation de fabrication d'objets en matière plastique qui viennent décrits uniquement à titre d'exemple non limitatif, sans sortir du cadre de protection défini par les revendications annexées.

## Revendications

1. Procédé de fabrication d'objets en matière plastique, notamment en matière plastique de récupération, ledit procédé comprenant une étape d'extrusion continue d'une matière plastique à au moins un poste d'extrusion (1), caractérisé en ce que ledit procédé comprend en outre :
- une étape intermédiaire de répartition constituée d'une part, par un préformage de manière à obtenir une préforme (10) autour d'un noyau (7) allongé et en déplacement par rapport audit poste d'extrusion (12) et d'autre part;, par une mise en place de ladite préforme (10) au droit d'au moins un poste de pressage (11), ladite préforme (10) étant supportée par ledit noyau (7), et
- une étape de pressage séquentiel de ladite préforme (10) audit poste de pressage (11), lequel poste de pressage (11) est déplaçable ou fixe, et destiné à la mise en forme.

2. Procédé de fabrication d'objets en matière plastique selon la revendication 1, caractérisé en ce qu'il comprend en outre une étape de retrait du noyau (7), ladite étape de retrait étant postérieure à ladite mise en place au droit du poste de pressage (11).

3. Procédé de fabrication d'objets en matière plastique selon l'une quelconque des revendications 1 ou 2, caractérisé en ce que l'étape de pressage est effectuée lors du déplacement dudit noyau (7) et simultanément à une étape de préformage d'un cycle ultérieur.

4. Procédé de fabrication d'objets en matière plastique selon l'une quelconque des revendications précédentes, caractérisé en ce qu'il comporte une seconde étape de préformage interposée entre lesdites étapes de répartition et de pressage séquentiel.

5. Procédé de fabrication d'objets en matière plastique selon l'une quelconque des revendications 3 ou 4, caractérisé en ce que ladite étape de pressage est effectuée pendant un déplacement dudit poste de pressage (11), ledit déplacement du poste de pressage étant suivi par un retour rapide du poste de pressage en position initiale.

6. Procédé de fabrication d'objets en matière plastique selon l'une quelconque des revendications précédentes, caractérisé en ce qu'il comporte en outre une étape d'accumulation de matière plastique sensiblement simultanée à ladite étape de pressage séquentiel.

7. Installation de fabrication d'objets en matière plastique, notamment en matière plastique de récupération, ladite installation comprenant au moins un poste d'extrusion (1) qui comprend au moins une tête d'extrusion (2) présentant au moins une ouverture d'entrée de matière (5) et au moins une ouverture de sortie de matière (4),
caractérisée en ce que ladite installation comprend en outre :
- au moins un noyau (7) allongé déplaçable dans ladite ouverture de sortie de matière (4), de manière à constituer une préforme (10) de la matière autour dudit noyau (7) se déplaçant dans l'ouverture de sortie (4), et
- au moins un premier poste de pressage (11) séquentiel déplaçable ou fixe, et apte à presser ladite préforme (10) constituée autour dudit noyau (7).

8. Installation de fabrication d'objets en matière plastique selon la revendication 7, caractérisée en ce que ladite tête d'extrusion (2) comporte une ouverture d'entrée ou de sortie (6) du noyau (7) alignée avec ladite ouverture de sortie de matières (4) pour permettre le déplacement du noyau (7) à l'intérieur desdites ouvertures (6, 4), et un moyen d'actionnement (8) du noyau (7), ledit noyau (7) étant supporté par la tête d'extrusion (2).

9. Installation de fabrication d'objets en matière plastique selon l'une quelconque des revendications 7 à 8, caractérisée en ce que lesdits postes d'extrusion (1) et de pressage (11) sont déplaçables l'un par rapport à l'autre selon un mouvement de va-et-vient.

10. Installation de fabrication d'objets en matière plastique selon l'une quelconque des revendications 7 à 9, caractérisée en ce qu'elle comporte un accumulateur (16) disposé avant ladite tête d'extrusion (2) par rapport au sens de circulation de la matière plastique (9).

11. Installation de fabrication d'objets en matière plastique selon l'une quelconque des revendications 7 à 10, caractérisée en ce qu'elle comporte un second poste de pressage (23) séquentiel et associé au premier poste de pressage (11).

12. Installation de fabrication d'objets en matière plastique selon l'une quelconque des revendications 7 à 11, caractérisée en ce que ledit noyau (7) et/ou ledit poste de pressage (11) comportent au moins un moyen d'injection (20) de fluide (22) au coeur de ladite préforme (10).

13. Installation de fabrication d'objets en matière plastique selon l'une quelconque des revendications 7 à 12, caractérisée en ce que ledit noyau (7) a une forme sensiblement tronconique s'évasant dans la direction de circulation de la matière plastique.

14. Installation de fabrication d'objets en matière plastique selon l'une quelconque des revendications 7 à 13, caractérisée en ce que ledit noyau (7) et/ou ledit poste de pressage (11) comportent des reliefs (31) aptes à imprimer des rainures sur lesdits objets, lesdits reliefs étant éventuellement disposés sur une même surface sensiblement conique.
